**Europäisches Patentamt**

**European Patent Office**

**Office européen des brevets**

(19)

(11) Publication number: **0 320 029**
**A1**

# EUROPEAN PATENT APPLICATION

(12)

(21) Application number: **88202522.4**

(22) Date of filing: **11.11.88**

(51) Int. Cl.⁴ **F16F 6/00 , D03D 49/14**

(30) Priority: **04.12.87 BE 8701387**

(43) Date of publication of application:
**14.06.89 Bulletin 89/24**

(84) Designated Contracting States:
**CH DE FR IT LI**

(71) Applicant: **Picanol N.V.**
**Polenlaan 3-7**
**B-8900 Ieper(BE)**

(72) Inventor: **Cappelaere, Johan**
**Provenstraat 3**
**B-8970 Poperinge(BE)**

(74) Representative: **Donné, Eddy**
**Bureau M.F.J. Bockstael nv Arenbergstraat**
**13**
**B-2000 Antwerpen(BE)**

(54) **Damping device for the backrest roller of a weaving machine.**

(57) Damping device for the backrest roller of a weaving machine, characterized in that it consists essentially of a damper (23) formed by a a first core (24) provided with a solenoid (25) and a second core (26), in which the cores can perform to-and-fro movements relative to one another, and in which each of them is connected to one of the opposite attachment points (27, 28) of the damper (23); and means (29) to determine the electric current (I) in the solenoid (25).

*Fig.3*

## Damping device for the backrest roller of a weaving machine

This invention concerns a damping device for the backrest roller of a weaving machine.

In weaving machines, the warp threads from the warp beam are bent over a backrest roller and guided toward the weaving frames. As is known, such a backrest roller is suspended such that it is mobile, and provided with an elastic mechanism, so that it can be forced in one direction such that the warp threads are kept under tension. Due to the opening and closing of the shed, movements take place in the warp during weaving, resulting in an oscillating movement of the backrest roller. In order to limit the amplitude of the movements of the backrest roller, it is equipped with a damper.

In known weaving machines, conventional oil dampers are used for this purpose, consisting of an oil-filled cylinder and a piston mounted inside the cylinder, provided with passages so that the oil can flow from one side of the piston to the other.

A great disadvantage of conventional oil dampers is that they are suitable for low frequency movements only, because at high frequencies the oil no longer has the time to move. Oil dampers are therefore unsuitable for use as damping devices for the backrest rollers of high-speed weaving machines.

Such known dampers also have the disadvantage that they lose their damping effect to a certain extent as soon as they heat up, partly because the oil then becomes less viscous and can more easily flow from one damper chamber to the other and vice-versa.

The present invention has as its aim to provide a damping device for the backrest roller of a weaving machine whereby the above-mentioned disadvantages are systematically avoided. In other words, this means that the device according to the invention works optimally at all machine speeds, that the damping effect can easily be adjusted to achieve the desired damping effect, and that the operation of the damping device is no longer sensitive to temperature.

The damping effect of the damping device according to the invention can be adjusted electrically and/or electronically, thereby giving it the advantage that it can be automatically and rapidly adjusted without any mechanical intervention. Such adjustment enables the damping effect on the backrest roller to be modified during weaving. With a suitable adjustment, starting marks during weaving machine startup can be simply prevented, or at least kept to a minimum.

For this purpose, the damping device according to the invention consists essentially: of a damper formed by a first core provided with a solenoid and a second core, whereby these cores can make to-and-fro movements relative to one another, and whereby each of them is connected to one of the opposite attachment points of the damper; and means that determine the electric current in the solenoid.

Because the operation of this device is based on the magnetic effects created by the relative motion of the two above-mentioned cores, the friction in the damper can be kept very low with respect to the friction occurring in the known oil dampers, with the advantage that little or no wear occurs.

In a first embodiment the second core of the damper consists of a permanent magnet, while the means of determining the electric current in the solenoid consists of an electrical load, preferably adjustable. This embodiment offers the specific advantage that the oscillation energy can be converted into heat which can be discharged outside the damper, more specifically to the electrical load. The damper therefore does not heat up.

In a second embodiment, the second core consists of a soft iron body, while the means to determine the electric current in the solenoid consist of a current generator, preferably adjustable.

In order to explain the characteristics of the invention, by way of example only and without being limitative in any way, some preferred embodiments are described below, with reference to the accompanying drawings, where:

- fig. 1 shows the known conventional oil damper;
- fig. 2 shows a weaving machine that uses the damping device according to the invention;
- fig. 3 shows a damping device according to the invention;
- fig. 4 shows a possible embodiment of the electrical load used in fig. 3;
- fig. 5 shows a variant of the damping device according to the invention.

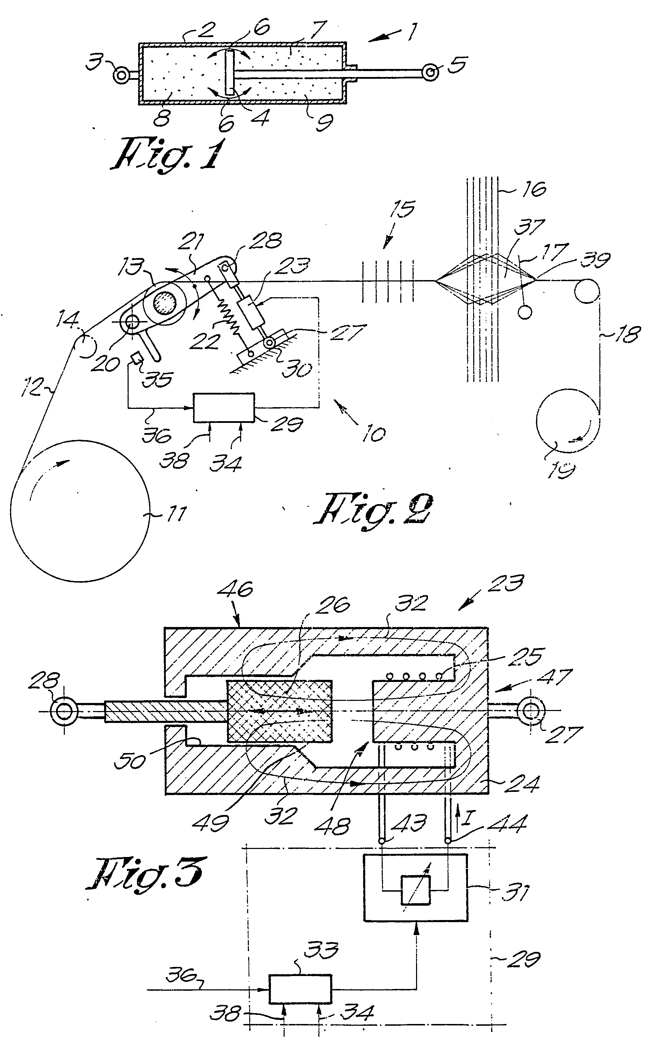

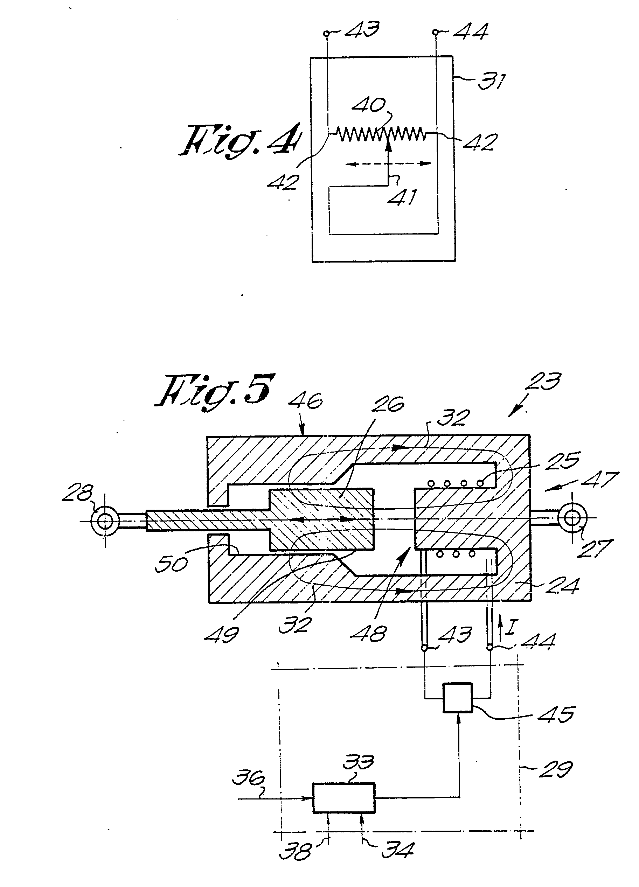

Fig. 1 shows a conventional oil damper 1, consisting of a cylindrical housing 2, to which a first attachment point 3 is secured, and a piston 4 which can move within the oil damper 1 and which is connected to the second attachment point 5. The piston 4 is provided with a number of passages 6 for the oil 7 in the cylinder 2, such that this oil can flow between the chambers 8 and 9 during the to-and-fro movement of the piston 4. As a result of the construction of such a conventional oil damper, it presents all the disadvantages mentioned in the preamble.

Fig. 2 shows a weaving machine in which the damping device 10 according to the invention is illustrated. The most important components of the weaving machine in this embodiment are, as is known, the warp beam 11, the warp threads or warp 12, a mobile backrest roller 13, an optional fixed backrest roller 14, a warp stop motion 15, the weaving harnesses 16, the reed 17, the cloth 18, and the cloth beam 19. The mobile backrest roller 13 is suspended close to its extremities in supports 21, which can revolve around a fixed point 20; said supports can be forced into a given position by elastic means 22, such as a spring.

The damping device 10 as shown in fig. 3 consists essentially of firstly a damper 23 comprising a first core 24 provided with a solenoid 25, and a second core 26, whereby the first and second cores are mobile with respect to one another, and each of them is connected to the opposite attachment point 27 or 28 of the damper 23, and secondly of means 29 to determine the electric current I in the solenoid.

A shown in fig. 2, one or more dampers 23 are located parallel to the elastic means 22, whereby they are therefore connected firstly to the rotating supports 21, and secondly to the frame 30 of the weaving machine. The core 24 that carries the solenoid 25 is preferably fixed-mounted, in other words the attachment point 27 is connected to the frame 30 of the weaving machine, while the attachment point 28 that is connected to the second core 26 is coupled to the rotating supports 21. As a result the solenoid 25 is not subject to the oscillation of the backrest roller during the operation of the weaving machine, so that the likelihood of mechanical damage to the solenoid 25 is limited. Because the second core 26 is generally smaller than the first core 24, for reasons of construction, it is also dynamically more advantageous to couple the second core, rather than the first core, to the mobile backrest roller.

In the embodiment shown in fig. 3, the first core 24 consists of a magnetically conducting material, such as soft iron, while the second core 26 consists essentially of a permanent magnet. In this embodiment, the means 29 that determine the electric current I in the solenoid 25 consists essentially of an electrical load 31, preferably adjustable, such as for example, an adjustable electrical resistor or an adjustable electronic load.

The operation of the device as shown in fig. 3 can be deduced simply from the figure, and consists in the generation of a variable flux 32 in the first core 24 as a result of the to-and-fro movement movement of the second core 26, resulting in the generation of a voltage in the solenoid 25, which, owing to the presence of the electrical load 31, creates the above-mentioned current I. This causes the power in the electrical load 31 to be dispersed, so that the mechanical oscillation energy is converted into heat, and a mechanical damping effect is created in the damper 23.

As shown in fig. 3, the above-mentioned means 29 can include a control unit 33, whereby the quantity of the electrical load 31 can be adjusted by means of set values 34. Clearly the setting may or may not be modified automatically during the weaving process.

As described in the preamble, the quantity of damping has to be adjusted to suit the type of warp threads. It should be noted that with highly elastic threads the damping effect should preferably be set high, and with threads having low elasticity, the damping effect should preferably be set low. It is in fact known that if a high damping effect is selected with low elasticity threads, thread breakages will occur frequently.

The adjustment should also preferably be set to suit the movements of the backrest roller 13, for example, by using a detector 35 that operates with the backrest roller 13, or on a swivel support 21 of the backrest roller 13, and that transmits a signal 36 as a function of the movement of the backrest roller 13.

As already explained in the preamble, the oscillating movement of the backrest roller 13 occurs as a result of the movement of the warp threads 12, which is in turn the result of the opening and closing of the shed 37. As a result, the amplitude of the movement of the backrest roller 13 can be measured with the detector 35. A possible adjustment, which can be performed with the control unit 33 in this case, consists in modifying the quantity of the electrical load 31 in order to determine experimentally which setting ensures the optimum damping effect, in other words the least amplitude of the movement of the backrest roller 13. Depending on the type of warp threads, it is possible in this way to start from a set value 34 of the load 31 which approximates a good setting.

In controlling the adjustable load 31, the startup or the start signal 38 of the weaving machine can also be taken into consideration, in order to modify the damping effect of the damper 23 such that starting marks are prevented, or at least kept to a minimum. In this way the damping effect on the backrest roller 13 can be set as high as possible before startup, so that unwanted movement of the backrest roller 13 during startup can be eliminated as far as possible. By setting a high damping effect the backrest roller 13 can be kept practically immobile, so that when the shed is formed the tension in the warp 12 increases, and the cloth line or fell line 39 is driven backward, so that the adverse effect of the insufficient beating up power of the sley or the reed 17 at startup is compensated. In this way, starting marks in the cloth 18 are prevented.

As shown in fig. 4, the adjustable electrical load 31 can consist of a resistor 40, with a mobile centre tap 41 which is connected to one of the side connections 42, so that by altering the position of the centre tap 41 it is possible to adjust the resistance at the clamps 43 and 44.

The electrical load 31 can also consist of an electronic load, in other words a load consisting of electronic components. This type of load presents the advantage that it can be adjusted more quickly.

Fig. 5 shows a variant of the invention in which both the first and second cores consists of a magnetically conducting material, such as soft iron, and in which the means 29 to determine the electric current I in the solenoid consist of a current generator 45 to which the solenoid 25 is connected.

The operation of this damper 23 is as follows. When a current I is routed through the solenoid 25, a flux 32 is generated. Because of the to-and-fro movement of the second core 26, the flux 32 fluctuates. The magnetic field generated by the fluctuations of the flux 32 excites eddy currents in this core 26, so that the mechanical energy is converted into heat, which also creates a damping effect.

Clearly the current generator 45 should preferably be adjustable, so that the damping effect can be adjusted. Again, control can be exercised by means of the above-mentioned control unit 33.

The construction of both cores is preferably as shown in figs. 3 and 5; in other words, the first core 24 consists of a cylindrical housing 46, closed by a radial wall 47 provided with an inward-orientated axial part 48 around which the solenoid 25 is wound, and the second core 26 consists of a cylindrical body located in line with said part 48. In this embodiment, the outer wall 49 of the cylindrical body of the second core 26 can slide in the inner wall 50 of the cylindrical housing 41, so that said cylindrical body slides.

The present invention is not limited to the embodiment described by way of example and shown in the drawings; on the contrary, such a damping device can be constructed in various forms and dimensions, while still remaining within the scope of the invention.

## Claims

1. Damping device for the backrest roller of a weaving machine, characterized in that it consists essentially of a damper (23) formed by a first core (24) provided with a solenoid (25) and a second core (26), in which the cores can perform to-and-fro movements relative to one another, and in which each of them is connected to one of the opposite attachment points (27, 28) of the damper (23); and means (29) to determine the electric current (I) in the solenoid (25).

2. Damping device according to claim 1, characterized in that the damper (23) is connected to the frame (30) of the weaving machine through its first core (24), while it is connected to the mobile backrest roller (13) or its swivel supports (21) through its second core (26).

3. Damping device according to claim 1 or 2, characterized in that the second core (26) consists of a permanent magnet, and in that the means (29) to determine the electric current (I) in the solenoid (25) consist essentially of an electrical load (31).

4. Damping device according to claim 3, characterized in that the electrical load (31) is adjustable.

5. Damping device according to claim 4, characterized in that the electrical load (31) consists of a resistor (40) with a mobile centre tap (41) connected to one of the side connections (42).

6. Damping device according to claim 1 or 2, characterized in that the second core (26) consists of a soft iron body, and in that the means (29) to determine the electric current (I) in the solenoid (25) consist essentially of a current generator (45).

7. Damping device according to claim 6, characterized in that the current generator (45) is adjustable.

8. Damping device according to claim 4, 5 or 7, characterized in that the means (29) to determine the electric current (I) in the solenoid (25) are adjusted by means of a control unit (33), in which said control unit (33) is coupled to at least one detector (35) that operates on the mobile backrest roller (13), and transmits a signal corresponding to the displacement of the backrest roller (13).

9. Damping device according to one of the above claims, characterized in that during weaving machine startup it sets the damping effect as high as possible.

10. Damping device according to one of the above claims, characterized in that the first core (24) of the damper (23) consists essentially of a cylindrical housing (46) provided with a radial wall (47) with an inward-orientated axial part (48) around which the solenoid (25) is wound, and in that the second core (26) consists of a cylindrical body that lies essentially in line with said axial part (48), in which the cylindrical body of the second core (26) with its outer wall (49) is mobile inside the inner wall (50) of said cylindrical housing (46).

EP 0 320 029 A1

*Fig. 1*

*Fig. 2*

*Fig. 3*

*Fig.4*

*Fig.5*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 543 492 (TEINZER) * Abstract; column 1, claims 1-3,10; column 3, lines 27-43; column 5, lines 8-14; figure 4 * | 1-4 | F 16 F 6/00 D 03 D 49/14 |
| A | | 10 | |
| Y | CH-A- 344 689 (SULZER) * Page 2, lines 1-13; figure 1 * | 1-4 | |
| A | US-A-3 072 154 (LOCHER) * Column 3, line 40 - column 4, line 60; column 5, lines 17-54; column 8, lines 37-56; figures 1,2,4 * | 6-9 | |
| A | US-A-3 174 587 (WALTON) * Column 2, lines 56-63; column 3, lines 47-50; figure 2 * | 5 | |
| A | US-A-2 973 969 (THALL) * Column 3, lines 16-44; column 4, line 69 - column 5, line 38; figures 2,5 * | 1,3,4 | TECHNICAL FIELDS SEARCHED (Int. Cl.4) |
| A | FR-A-2 339 762 (M.A.N. GUTEHOFFNUNGSHUTTE STERKRADE) * Page 4, line 7 - page 5, line 25; figure * | 8 | F 16 F D 03 D G 05 D G 12 B |
| A | FR-A-2 567 925 (SOCIETE ALSACIENNE DE CONSTRUCTION DE MATERIEL TEXTILE) * Whole document * | 1,2 | |

The present search report has been drawn up for all claims

| Place of search | Date of completion of the search | Examiner |
|---|---|---|
| THE HAGUE | 01-03-1989 | MEIJS P.C.J. |